# EUROPÄISCHE PATENTSCHRIFT

(11) **EP 1 241 331 B1**
(45) Veröffentlichungstag und Bekanntmachung des Hinweises auf die Patenterteilung: **19.04.2006**
(21) Anmeldenummer: 02001987.3
(22) Anmeldetag: 05.02.2002
(51) Int. Cl.: F01N 7/14, F01N 7/18, F01N 3/28

(54) **Katalysator-Trichter und Katalysatorgehäuse**
Catalyst inlet/outlet cone and catalyst housing
Cône d'entrée et de sortie d'un boîtier de catalyseur

(30) Priorität: 17.03.2001 DE 10113093
(43) Veröffentlichungstag der Anmeldung: 18.09.2002
(73) Patentinhaber: Volkswagen Aktiengesellschaft, 38436 Wolfsburg (DE)
(72) Erfinder: Behner, Attila, 34270 Schauenburg (DE); Emde, Fred, 34134 Kassel (DE); Busch, Gerd, 34582 Borken (DE); Hubert, Herbert, 38471 Rühen (DE)
(74) Vertreter: Jung HML

(56) Entgegenhaltungen:
- EP-A- 0 336 115
- DE-A- 19 711 789
- US-A- 5 408 828

## Beschreibung

Die Erfindung betrifft einen Katalysator-Trichter, insbesondere einen isolierten Katalysator-Trichter, sowie ein Katalysatorgehäuse, das insbesondere mit einem derartigen Trichter versehen ist.

Katalysatorgehäuse dienen zur Aufnahme und Fixierung des vom Abgas einer Brennkraftmaschine durchströmten Katalysators, wobei der Katalysator üblicherweise durch einen mit einem katalytisch wirksamen Material beschichteten Monolithen (keramische oder metallische Bauform) gebildet wird. In einer verbreiteten Bauform wird der Monolith mit einer Blähmatte umwickelt, die die Aufgabe hat, den Monolithen zu lagern. Auf diese Blähmatte wird dann ein Blechmantel gelegt, der mit einer festgelegten Kraft gewickelt wird, wodurch der Monolith in Position gehalten wird. Anschließend wird der gespannte Blechmantel an den Stirnseiten geheftet und mittels einer Schweißnaht verschlossen. Stimseitig werden dann Ein- und Auslaßtrichter angebracht, die entsprechend den Anforderungen des Auspuffrohrs ausgerichtet sind. Das Anbringen der Trichter erfolgt ebenfalls über eine Schweißnaht.

Derartige Trichter können aus einer Blechplatine durch Tiefziehen hergestellt werden, wobei man dann Blechplatinen mit hoher Dicke verwenden muß, um nach dem Tiefziehen einen noch schweißbaren Kleindurchmesser für die Anbringung des Abgasrohres zu erhalten.

Aus der EP 0 818 615 ist ein Katalysatorgehäuse mit Ein- und Auslaßtrichtern bekannt, wobei ein Trichter durch Aufweiten des Großdurchmessers und Einziehen des Kleindurchmessers aus einem Rohr gefertigt wird. Dadurch ergeben sich unterschiedliche Materialdicken am Klein- und Großdurchmesser. Allerdings sind die Trichter nicht thermisch isoliert, so daß das einströmende Abgas abkühlt, was für das Regenerationsverhalten eines Katalysators ungünstig ist, da unter Umständen nicht die zur Regeneration notwendige Temperatur erreicht wird. Femer ist auch eine akustische Isolierung nicht gegeben.

Zur thermischen und akustischen Isolation eines Katalysator-Trichters wird in G 88 12 805.9 vorgeschlagen, eine äußere Isolationsschicht auf den Trichter aufzubringen. Nachteilig hierbei ist, daß die Isolationsschicht erst nach dem Verschweißen in einem zusätzlichen Arbeitsgang aufgebracht werden kann.

Aus der DE-A 42 209 88 ist eine Abgasreinigungsvorrichtung bekannt, die einen Katalysator-Trichter bestehend aus einem Außentrichter und einem Innentrichter beschreibt, wobei der Raum zwischen Innen- und Außentrichter mit einem lsobermaterial ausgefüllt ist. Innen- und Außentrichter sind am Kleindurchmesser miteinander verbunden. Der zwischen dem Innentrichter und dem Monolithen der Abgasreinigungsvorrichtung bestehende Spalt wird durch eine Manschette ausgefüllt, die teilweise zwischen Innen- und Außentrichter angeordnet ist. Dabei weist der Innentrichter an seinem Großdurchmesser einen nach innen gerichteten Rand auf. Durch die thermische Ausdehnung des Innentrichters müssen exakte Bemaßungen eingehalten werden, damit der Rand nicht auf den Monolithen drückt und diesen beschädigt. Ferner ist der Trichter bei Katalysatorgehäusen nicht einsetzbar, deren Mittelteil über nach innen gerichtete Anbindungsschrägen zur Anbringung der Trichter verfügen.

Dokument DE 197 11 789 A1 beschreibt ein Abgasreinigungssystem für ein Kraftfahrzeug mit einem Katalysator-Trichter gemäß dem Oberbegriff des Anspruchs 1.

Die Aufgabe wird durch die Merkmale eines Katalysatortrichters nach Anspruch sowie durch ein Katalysatorgehäuse nach Anspruch 13 oder 14 gelöst. Bevorzugte Ausgestaltungen der Erfindung sind Gegenstand der Unteransprüche.

Ein Katalysator-Trichter zur Anbindung eines Katalysatorgehäuses einer Abgasanlage eines Kraftfahrzeugs an die Abgasrohre weist einen Außentrichter (2) und darin angeordneten Innentrichter (3) mit dazwischen befindlichen Hohlraum (4) auf, wobei im Bereich des Großdurchmessers (6) der Innentrichter (3) innen am Außentrichter (2) verschiebbar und/oder unbefestigt anliegt, der Außentrichter am Großdurchmesser einen Kragen aufweist, an dem der Innentrichter von innen anliegt und der Großdurchmesser der Außentrichter um einen vorbestimmten Abstand Ober den Innentrichter hinausragt. Insbesondere kann auch der Innen- am Großdurchmesser mit einem Kragen versehen sein.

Vorzugsweise weisen Innentrichter und Außentrichter am Kleindurchmesser ebenfalls einen rohr- oder zylinderförmigenförmigen Kragen auf, wobei der Kragen des Innentrichters von innen an dem Kragen des Außentrichters anliegt und befestigt ist. Die Befestigung kann durch mehrere Punktschweißungen erfolgen, vorzugsweise werden vier Punktschweißungen verwendet. Bevorzugt überragt am Kleindurchmesser der Innentrichter den Außentrichter um einen vorbestimmten Abstand.

Je nach Verwendungszweck des Katalysator-Trichters ist in dem Hohlraum zwischen dem Innentrichter und dem Außentrichter eine Isolationsmatte bzw. Isolationsmaterial angeordnet Da bei einem Dieselmotor die Abgastemperatur geringer ist, wird in diesem Fall die Isolation durch die im Hohlraum eingeschlossene Luft bewirkt. Bei Benzinmotoren wird zur Isolation eine Keramikmatte verwendet, da die Abgastemperatur höher ist.

Ein erfindungsgemäßes Katalysatorgehäuse weist ein einen Katalysatorkörper, insbesondere Monolithen umschließendes Mittelteil und einem Einlaß- und einem Auslaßtrichter auf. Dabei ist das Mittelteil an mindestens einem seiner beiden Enden mit einer nach innen zeigenden Anbindungsschräge **z**ur Anbindung der Einlaß- bzw. Auslaßtrichter versehen und jeder Trichter weist jeweils einen Außentrichter und einen in dem Außentrichter angeordneten Innentrichter mit dazwischen befindlichen Hohlraum auf, wobei Innen- und Außentrichter am Kleindurchmesser miteinander verbunden sind. Jeder Trichter ist mit seinem Außentrichter mit der entsprechenden Anbindungsschräge des Mittelteils verbunden, vorzugsweise durch eine Schweißnaht, wobei hier der Innentrichter verschiebbar und/oder unbefestigt auf der Anbindungsschräge aufliegt, und der Außentrichter am Großkreis den Innentrichter um einen vorbestimmten Abstand überragt.

Bevorzugte Ausführungsformen der Erfindung werden nachfolgend anhand der folgenden Figuren näher erläutert.
- Fig. 1: zeigt einen Querschnitt durch den erfindungsgemäßen Katalysator-Trichter,
- Fig. 2: zeigt den erfindungsgemäßen Katalysator-Trichter in Draufsicht, und
- Fig.3: zeigt die erste Ausführungsform eines Katalysatorgehäuses mit erfindungsgemäßen Ein- und Auslaßtrichtern in Seitenansicht.

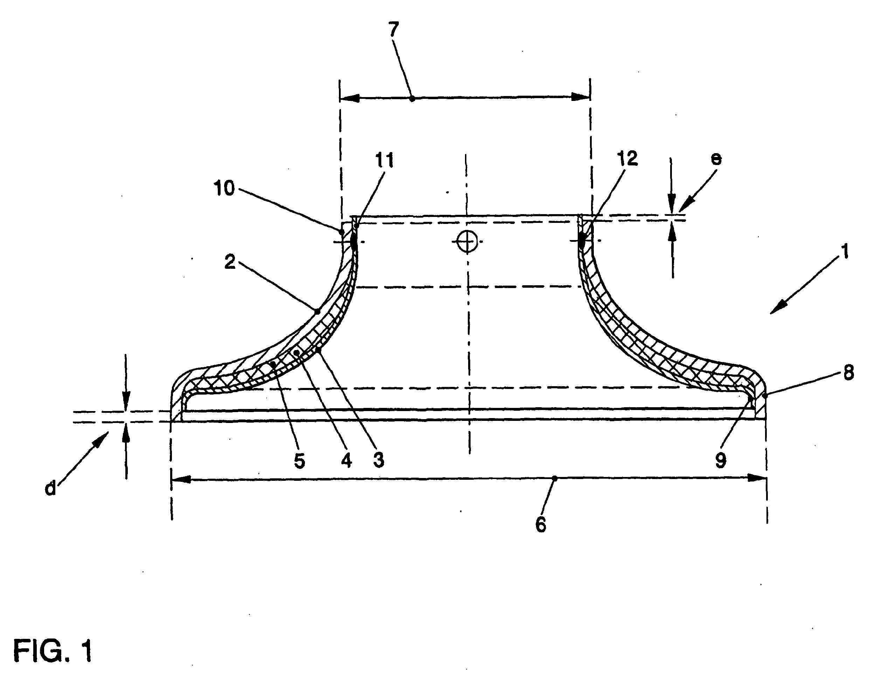

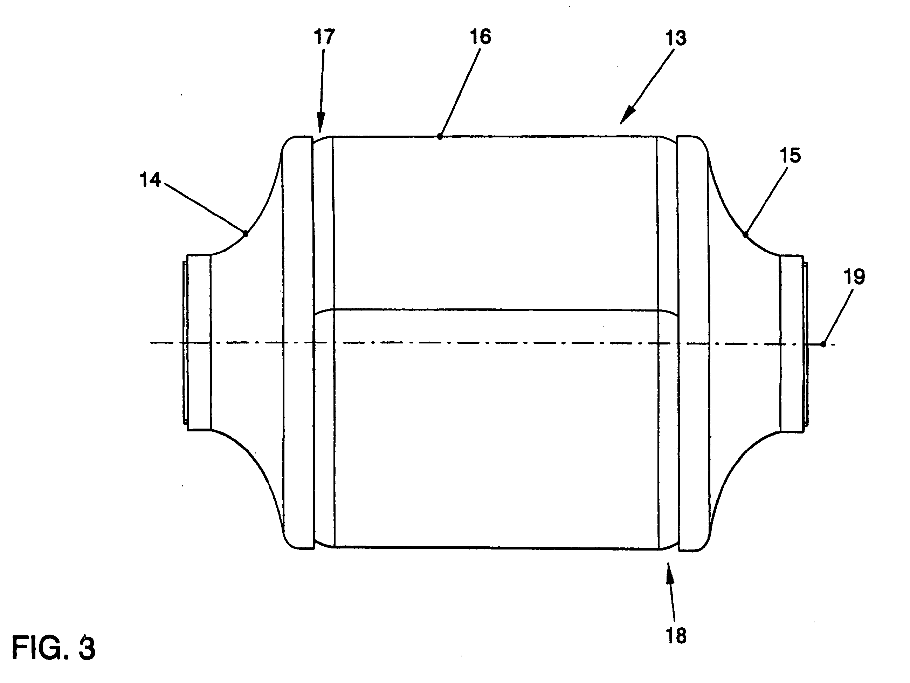

Der in Fig. 1 dargestellt Katalysator-Trichter 1 umfaßt einen Außentrichter 2 sowie einen Innentrichter 3. Durch unterschiedliche Krümmungen der Außen- und Innentrichter 2, 3 schließen die beiden Trichter 2, 3 einen Hohlraum 4 ein, der entweder selbst als Isolierung wirkt, oder in dem ein Isoliermaterial 5 eingebracht ist. Der Katalysatortrichter 1 weist einen Großdurchmesser 6 sowie einen Kleindurchmesser 7 auf. Am Großdurchmesser 6 wird das Mittelteil eines einen Monolithen enthaltenden Katalysatorgehäuses angeschlossen (siehe Fig. 3) während am Kleindurchmesser 7 das Abgasrohr einer Abgasanlage eines Kraftfahrzeugs angeschlossen wird (nicht dargestellt).

Am Großdurchmesser 6 weisen der Außentrichter 2 und der Innentrichter 3 jeweils einen zylinder- oder rohrförmigen als Kragen 8 und 9 bezeichnete Abschnitte auf, die parallel zur Symmetrieachse des Katalysator-Trichters 1 angeordnet sind. Der Kragen 9 des Innentrichters 3 liegt innen am Kragen 8 des Außentrichters 2 an, wobei der Außentrichter 2 am Großdurchmesser 6 um einen vorbestimmten Abstand d den Innentrichter 3 überragt. Bei der thermischer Ausdehnung des Innentrichters 3 kann sich so der Kragen 9 des Innentrichters 3 auf der Innenseite des Kragens 8 des Außentrichters 2 bewegen. Der Abstand d beträgt vorzugsweise 2mm mit einer Toleranz von 0,1 mm.

Am Kleindurchmesser 7 weisen der Außen- und der Innentrichter 2, 3 ebenfalls als Kragen ausgebildete zylinderförmige Abschnitte 10 und 11 auf, wobei hier der Innentrichter 3 den Außentrichter um einen vorbestimmten Abstand e überragt, wobei der Abstand e vorzugsweise 1 mm mit einer Toleranz von 0,1 mm beträgt.

Am Kleindurchmesser 7 ist der Innentrichter 3 mit dem Außentrichter 2 fest verbunden, wobei die Verbindung durch eine Anzahl von Punktschweißungen bewirkt wird. Im allgemeinen sind vier Punktschweißungen ausreichend. Dabei werden die Punktschweißungen der Außen- und Innentrichter 2, 3 an den Krägen 10, 11 in einem Abstand von vorzugsweise ca. 5 mm vom Rand des Kleindurchmessers des Innentrichters 3 mit einer Toleranz von 0,5 mm gesetzt.

In der bevorzugten Ausführungsform hat der Innentrichter 3 eine Wandstärke von 0,8 mm mit einer Toleranz von ± 0,1 mm und der Außentrichter 2 besitzt eine Wandstärke von 1,5 mm bis 2,00 mm mit einer Toleranz von ± 0,1 mm.

Die im vorangegangenen genannten Bemaßungen und Toleranzen eines erfindungsgemäßen Katalysator-Trichters 1 sind nur beispielhaft zu verstehen und richten sich nach den tatsächlichen Abmessungen des gesamten Katalysatorgehäuses entsprechend dessen Verwendung und Anordnung.

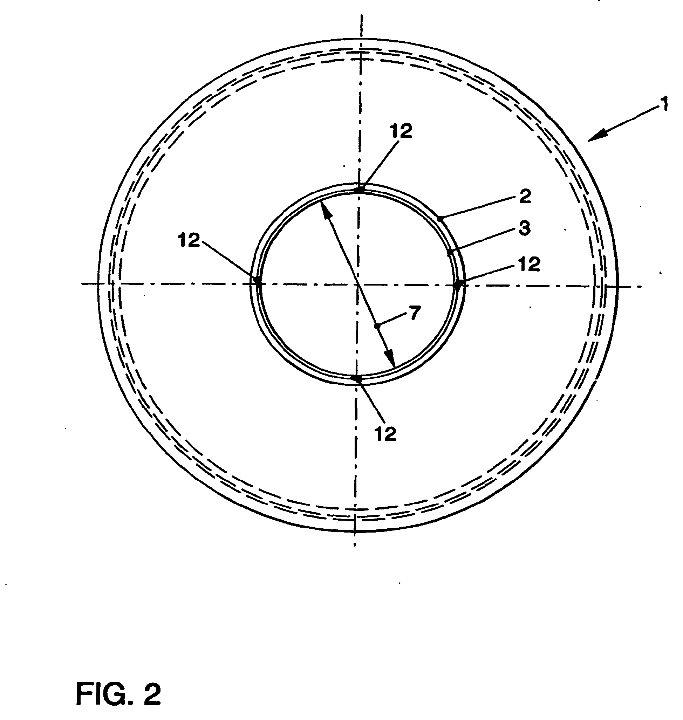

Fig. 2 zeigt den Katalysator-Trichter 1 der Fig. 1 in Draufsicht. Dargestellt ist der Außentrichter 2 sowie der Innentrichter 3 mit den vier Punktschweißungen 12, die am Kleindurchmesser 7 den Innentrichter 3 mit dem Außentrichter 3 verbinden.

Fig. 3 zeigt ein Katalysatorgehäuse 13 bestehend aus einem Mittelteil 16, das den Monolithen (nicht dargestellt) enthält. Das Katalysatormittelteil 16 ist an seinen Stirnseiten mit Anbindungsschrägen 17, 18 eines vorbestimmten Winkels zur Gehäuseachse 19 versehen. An diesen Anbindungsschrägen 17, 18 werden der Einlaßtrichter 14 und der Auslaßtrichter 15 angesetzt und verschweißt. Die Winkel der Anbindungsschrägen 17, 18 können beispielsweise zwischen 30° und 60° betragen.

### BEZUGSZEICHENLISTE

- 1: Trichter
- 2: Außentrichter
- 3: Innentrichter
- 4.: Hohlraum
- 5: Isolierung
- 6: Großdurchmesser
- 7: Kleindurchmesser
- 8: Kragen des Außentrichters am Großdurchmesser
- 9: Kragen des Innentrichters am Großdurchmesser
- 10: Kragen des Außentrichters am Kleindurchmesser
- 11: Kragen des Innentrichters am Kleindurchmesser
- 12: Punktschweißung
- 13: Katalysatorgehäuse
- 14: Einlaßtrichter
- 15: Auslaßtrichter
- 16: Mittelteil
- 17: Anbindungsschräge Einlaß
- 18: Anbindungsschräge Auslaß
- 19: Achse des Katalysatorgehäuses
- d: Überstand des Außentrichters am Großdurchmesser
- e: Überstand des Innentrichters am Kleindurchmesser

## Patentansprüche

1. Katalysator-Trichter zur Anbindung eines Katalysatorgehäuses (13) einer Abgasanlage eines Kraftfahrzeugs an die Abgasrohre, wobei der Katalysator-Trichter (1) einen Außentrichter (2) und darin angeordneten Innentrichter (3) mit dazwischen befindlichen Hohlraum (4) aufweist, wobei im Bereich des Großdurchmessers (6) der Innentrichter (3) innen am Außentrichter (2) verschiebbar und/oder unbefestigt anliegt, und wobei der Außentrichter (2) am Großdurchmesser (6) einen Kragen (8) aufweist, an dem der Innentrichters (3) von innen anliegt,
**dadurch gekennzeichnet, dass**
der Außentrichter (2) am Großdurchmesser um einen vorbestimmten Abstand über den Innentrichter (3) hinausragt.

2. Katalysator-Trichter nach Anspruch 1. **dadurch gekennzeichnet, daß** der Kragen (8) einen vorbestimmten Winkel relativ zur Trichterachse einnimmt.

3. Katalysator-Trichter nach einem der Ansprüche 1 oder 2, **dadurch gekennzeichnet, daß** der Kragen (8) des Außentrichters (2) eine zylindrische Form hat.

4. Katalysator-Trichter nach einem der Ansprüche 1 bis 3, **dadurch gekennzeichnet, daß** der Innentrichter (3) am Großdurchmesser (6) einen Kragen (9) aufweist, der an der Innenseite des Außentrichters (2) anliegt.

5. Katalysator-Trichter nach Anspruch 4, **dadurch gekennzeichnet, daß** der Kragen (9) des Innentrichters (3) eine zylindrische Form hat.

6. Katalysator-Trichter nach einem der vorangegangenen Ansprüche, **dadurch gekennzeichnet, daß** Innentrichter (3) und der Außentrichter (2) am Kleindurchmesser (7) jeweils einen Kragen (10, 11) aufweisen, wobei am Kleindurchmesser (7) der Kragen (11) des Innentrichters (3) von innen an dem Kragen (10) des Außentrichters (2) anliegt und befestigt ist.

7. Katalysator-Trichter nach Anspruch 6, **dadurch gekennzeichnet, daß** der Kragen (11 des Innentrichters (3) und der Kragen ((10) des Außentrichters (2) rohrförmig sind.

8. Katalysator-Trichter nach einem der vorhergehenden Ansprüche, **dadurch gekennzeichnet, daß** die Befestigung des Innentrichters (3) am Außentrichter (2) im Bereich des lveindurchmessers (7), insbesondere durch Schweißung, insbesondere durch mehrere Punktschweißungen (12) erfolgt ist.

9. Katalysator-Trichter nach einem der vorangegangenen Ansprüche, **dadurch gekennzeichnet, daß** am Kleindurchmesser (7) der Innentrichter (3) den Außentrichter (2) um einen vorbestimmten Abstand (e) überragt.

10. Katalysator-Trichter nach einem der vorangegangenen Ansprüche, **dadurch gekennzeichnet, daß** der Innentrichter (3) eine Wandstärke von 0,8 mm ± 0,1 mm und der Außentrichter (2) eine Wandstärke von 1,5 mm bis 2,00 mm ± 0,1 mm aufweist.

11. Katalysator-Trichter nach einem der vorangegangenen Ansprüche, **dadurch gekennzeichnet, daß** in dem Hohlraum (4) zwischen dem Innentrichter (3) und dem Außentrichter (2) eine Isolationsmatte (5) angeordnet ist.

12. Katalysator-Trichter nach einem der vorhergehenden Ansprüche, **dadurch gekennzeichnet, daß** das verschiebbare und/oder unbefestigte Anliegen des Innentrichters einem Ausgleich einer Wärmeausdehnung dient.

13. Katalysatorgehäuse (13) zur Aufnahme eines Katatysatorkörpers, insbesondere Monolithen, mit einem den Katalysatorkörper umschließendes Mittelteil (16) und einem Einlaß- (14) und einem Auslaßtrichter (15), wobei das Mittelteil (16) an mindestens einem seiner beiden Enden, insbesondere dem Einlaßende, mit einer nach innen zeigenden Anbindungsschräge (17, 18) zur Anbindung des Einlaß- (14) bzw. Auslaßtrichters (15) versehen ist, wobei mindestens einer der Trichter (14, 15), insbesondere der Einlaßtrichter, einen Außentrichter und einen in dem Außentrichter angeordneten Innentrichter mit dazwischen befindlichen Hohlraum aufweist und Innen- und Außentrichter am Kleindurchmesser miteinander verbunden sind, wobei der Trichter (14, 15) mit seinem Außentrichter mit der entsprechenden Anbindungsschräge (17, 18) des Mittelteils (16) verbunden ist und der Innentrichter verschiebbar und/oder unbefestigt auf der Anbindungsschräge (17, 18) aufliegt, **dadurch gekennzeichnet, dass** der Außentrichter am Großkreis den Innentrichter um einen vorbestimmten Abstand überragt.

14. Katalysatorgehäuse nach Anspruch 13, **dadurch gekennzeichnet, daß** die Verbindung zwischen dem Mittelteil (16) und den Katalysator-Trichtern (14, 15) jeweils durch eine Schweißnaht erfolgt.

## Revendications

1. Cône de catalyseur pour la liaison d'un boîtier de catalyseur (13) d'une installation de gaz d'échappement d'un véhicule automobile au tuyau d'échappement, le cône de catalyseur (1) présentant un cône extérieur (2) et un cône intérieur (3) disposé dans celui-ci avec un espace creux (4) situé entre eux, le cône intérieur (3) pouvant être déplacé et/ou s'appliquant de manière non fixe à l'intérieur contre le cône extérieur (2) dans la région du grand diamètre (6), et le cône extérieur (2) présentant sur le grand diamètre (6) un rebord (8) contre lequel s'applique le cône intérieur (3) depuis l'intérieur,
**caractérisé en ce que**
le cône extérieur (2) fait saillie au niveau du grand diamètre d'une distance prédéterminée au-delà du cône interne (3).

2. Cône de catalyseur selon la revendication 1,
**caractérisé en ce que** le rebord (8) est orienté suivant un angle prédéterminé par rapport à l'axe du cône.

3. Cône de catalyseur selon l'une quelconque des revendications 1 ou 2, **caractérisé en ce que** le rebord (8) du cône extérieur (2) a une forme cylindrique.

4. Cône de catalyseur selon l'une quelconque des revendications 1 à 3, **caractérisé en ce que** le cône intérieur (3) présente sur le grand diamètre (6) un rebord (9) qui s'applique contre le côté intérieur du cône extérieur (2).

5. Cône de catalyseur selon la revendication 4, **caractérisé en ce que** le rebord (9) du cône intérieur (3) a une forme cylindrique.

6. Cône de catalyseur selon l'une quelconque des revendications précédentes, **caractérisé en ce que** le cône intérieur (3) et le cône extérieur (2) présentent sur le petit diamètre (7) à chaque fois un rebord (10, 11), le rebord (11) du cône intérieur (3) au niveau du petit diamètre (7) s'appliquant et se fixant depuis l'intérieur contre le rebord (10) du cône extérieur (2).

7. Cône de catalyseur selon la revendication 6, **caractérisé en ce que** le rebord (11) du cône intérieur (3) et le rebord (10) du cône extérieur (2) sont tubulaires.

8. Cône de catalyseur selon l'une quelconque des revendications précédentes, **caractérisé en ce que** la fixation du cône intérieur (3) sur le cône extérieur (2) est effectuée dans la région du petit diamètre (7), notamment par soudage, notamment par plusieurs soudures par point (12).

9. Cône de catalyseur selon l'une quelconque des revendications précédentes, **caractérisé en ce que** le cône intérieur (3) dépasse du cône extérieur (2) d'une distance (e) prédéterminée au niveau du petit diamètre (7).

10. Cône de catalyseur selon l'une quelconque des revendications précédentes, **caractérisé en ce que** le cône interne (3) présente une épaisseur de paroi de 0,8 nm ± 0,1 mm et le cône extérieur (2) présente une épaisseur de paroi de 1,5 mm à 2,0 mm ± 0,1 mm.

11. Cône de catalyseur selon l'une quelconque des revendications précédentes, **caractérisé en ce qu'**un tapis isolant (5) est disposé dans l'espace creux (4) entre le cône intérieur (3) et le cône extérieur (2).

12. Cône de catalyseur selon l'une quelconque des revendications précédentes, **caractérisé en ce que** l'application déplacable et/ou non fixe du cône intérieur sert à compenser une dilatation thermique.

13. Boîtier de catalyseur (13) destiné à recevoir un corps de catalyseur, notamment des monolithes, comprenant une partie centrale (16) entourant le corps de catalyseur et un cône d'entrée (14) et de sortie (15), la partie centrale (16) étant pourvue, sur au moins l'une de ses deux extrémités, notamment l'extrémité d'entrée, d'un biseau de liaison (17, 18) tourné vers l'intérieur pour la liaison du cône d'entrée (14) respectivement de sortie (15), au moins l'un des cônes (14, 15), notamment le cône d'entrée, présentant un cône extérieur et un cône intérieur disposé dans le cône extérieur avec un espace creux situé entre eux, et le cône intérieur et le cône extérieur étant connectés l'un à l'autre au niveau du petit diamètre, le cône (14, 15) étant connecté avec son cône extérieur au biseau de liaison correspondant (17, 18) de la partie centrale (16) et le cône intérieur reposant de manière déplaçable et/ou non fixe sur le biseau de liaison (17, 18), **caractérisé en ce que** le cône extérieur dépasse du cône intérieur, au niveau du grand cercle, d'une distance prédéterminée.

14. Boîtier de catalyseur selon la revendication 13, **caractérisé en ce que** la connexion entre la partie centrale (16) et les cônes de catalyseur (14, 15) s'effectue à chaque fois par un joint de soudure.

## Claims

1. Catalytic converter funnel for connecting a catalytic converter housing (13) of an exhaust gas system of a motor vehicle to the exhaust pipes, the catalytic converter funnel (1) having an outer funnel (2) and an inner funnel (3) arranged within the latter with a hollow space (4) in between, the inner funnel (3) bearing against the inside of the outer funnel (2) in a displaceable and/or unfastened manner in the region of the major diameter (6), and the outer funnel (2) having at the major diameter (6) a flange (8), against the inside of which the inner funnel (3) bears,
**characterized in that**
the outer funnel (2) protrudes a predetermined distance beyond the inner funnel (3) at the major diameter.

2. Catalytic converter funnel according to Claim 1, **characterized in that** the flange (8) encloses a predetermined angle relative to the funnel axis.

3. Catalytic converter funnel according to one of claims 1 or 2, **characterized in that** the flange (8) of the outer funnel (2) has a cylindrical form.

4. Catalytic converter funnel according to one of Claims 1 to 3, **characterized in that** the inner funnel (3) has at the major diameter (6) a flange (9) which bears against the inside of the outer flange (2).

5. catalytic converter funnel according to Claim 4, **characterized in that** the flange (9) of the inner funnel (3) has a cylindrical form.

6. Catalytic converter funnel according to one of the preceding claims, **characterized in that** inner funnel (3) and the outer funnel (2) each have a respective flange (10, 11) at the minor diameter (7), the flange (11) of the inner funnel (3) bearing against and being fastened to the inside of the flange (10) of the outer funnel (2) at the minor diameter (7).

7. Catalytic converter funnel according to Claim 6, **characterized in that** the flange (11) of the inner funnel (3) and the flange (10) of the outer funnel (2) are tubular.

8. Catalytic converter funnel according to one of the preceding claims, **characterized in that** the inner funnel (3) is fastened to the outer funnel (2) in the region of the minor diameter (7), in particular by means of welding, in particular by means of a plurality of spot welds (12).

9. Catalytic converter funnel according to one of the preceding claims, **characterized in that** the inner funnel (3) protrudes a predetermined distance (e) beyond the outer funnel (2) at the minor diameter (7).

10. Catalytic converter funnel according to one of the preceding claims, **characterized in that** the inner funnel (3) has a wall thickness of 0.8 mm ± 0.1 mm and the outer funnel (2) has a wall thickness of 1.5 mm to 2.00 mm ± 0.1 mm.

11. Catalytic converter funnel according to one of the preceding claims, **characterized in that** insulating matting (5) is arranged in the hollow space (4) between the inner funnel (3) and the outer funnel (2).

12. Catalytic converter funnel according to one of the preceding claims, **characterized in that** the displaceable and/or unfastened contact of the inner funnel serves to compensate for thermal expansion.

13. Catalytic converter housing (13) for holding a catalytic converter body, in particular a monolith, having a central part (16) which encloses the catalytic converter body and having an inlet funnel (14) and an outlet funnel (15), the central part (16) being provided at at least one of its two ends, in particular at the inlet end, with an inwardly pointing connecting chamfer (17, 18) for connecting the respective inlet funnel (14) or outlet funnel (15), at least one of the funnels (14, 15), in particular the inlet funnel, having an outer funnel and an inner funnel arranged within the latter with a hollow space in between, and the inner funnel and outer funnel being connected to one another at the minor diameter, the outer funnel of each funnel (14, 15) being connected to the corresponding connecting chamfer (17, 18) of the central part (16) and the inner funnel bearing against the connecting chamfer (17, 18) in a displaceable and/or unfastened manner, **characterized in that** the outer funnel protrudes a predetermined distance beyond the inner funnel at the major circle.

14. Catalytic converter housing according to Claim 13, **characterized in that** the catalytic converter funnels (14, 15) are each connected to the central part (16) by means of a weld seam.
